# EUROPÄISCHE PATENTSCHRIFT

(11) **EP 2 145 929 B1**
(45) Veröffentlichungstag und Bekanntmachung des Hinweises auf die Patenterteilung: **24.06.2020**
(21) Anmeldenummer: 08160715.2
(22) Anmeldetag: 18.07.2008
(51) Int. Cl.: C09C 1/30, C09J 11/02, C08K 3/36, G03G 9/097, B82Y 30/00, C08K 9/06, C09D 7/62, C09D 7/40

(54) **Verfahren zur Herstellung redispergierbarer, oberflächenmodifizierter Siliciumdioxidpartikel**
Method for manufacturing redispersible, surface-modified silicon dioxide particles
Procédé de fabrication de particules de dioxyde de silicium modifiées en surface pouvant être redispersées

(43) Veröffentlichungstag der Anmeldung: 20.01.2010
(73) Patentinhaber: Evonik Operations GmbH, 45128 Essen (DE)
(72) Erfinder: Lortz, Wolfgang, Dr., 63607 Wächtersbach (DE); Perlet, Gabriele, 63538 Grosskrotzenburg (DE); Diener, Uwe, 63538 Grosskrotzenburg (DE); Reitz, Sascha, 63456 Hanau (DE)
(74) Vertreter: Evonik Patent Association

(56) Entgegenhaltungen:
- EP-A- 1 331 254
- EP-A- 1 657 283
- WO-A-2005/123578
- US-A1- 2003 131 761
- US-A1- 2005 011 409
- US-A1- 2006 163 533
- US-A1- 2006 171 872
- SEEKKUARACHCHI I N ET AL: "Dispersion mechanism of nano-particulate aggregates using a high pressure wet-type jet mill" CHEMICAL ENGINEERING SCIENCE, OXFORD, GB, Bd. 63, Nr. 9, 1. Mai 2008 (2008-05-01), Seiten 2341-2366, XP022595858 ISSN: 0009-2509 [gefunden am 2008-01-15]

## Beschreibung

Die Erfindung betrifft ein Verfahren zur Herstellung oberflächenmodifizierter, redispergierbarer Siliciumdioxidpartikel, die Partikel selbst und deren Verwendung.

Oberflächenmodifizierte Siliciumdioxidpartikel können in einer Vielzahl von Anwendungen zum Einsatz kommen. Insbesondere in Tonerzusammensetzungen, als Füllstoffe und als Bestandteil von Lacken. Oberflächenmodifizierte Siliciumdioxidpartikel werden erhalten, indem man Siliciumdioxidpartikel, die reaktive Gruppen, wie Silanolgruppen, auf ihrer Oberfläche tragen mit einem Oberflächenmodifizierungsmittel umsetzt. Je nach Art der Modifizierungsmittels können überwiegend hydrophobe oder überwiegend hydrophile Partikel resultieren.

Als Siliciumdioxidpartikel kommen sowohl durch nasschemische Prozesse hergestellte Partikel in Frage, wie auch solche, die durch Gasphasenprozesse hergestellt wurden. Insbesondere durch Gasphasenprozesse hergestellte Siliciumdioxidpartikel neigen zur Bildung von Aggregaten und Agglomeraten. Eine Oberflächenmodifizierung ändert an diesen Strukturen nichts.

Um kleinere oberflächenmodifizierte Partikel zu erhalten, wird versucht die Modifizierung in Dispersionen, die hydrophile Siliciumdioxidpartikel enthalten, durchzuführen. Es ist durch geeignete Dispergiertechniken möglich Dispersionen herzustellen, deren mittlerer Durchmesser kleiner als 100 nm ist.

In WO 2006/045012 wird eine wässerige Dispersion von Siliciumdioxidpartikeln mit Silylaminen zur Reaktion gebracht. Durch Abtrennung der flüssigen Phase und nachfolgende Trocknung können die oberflächenmodifizierten Siliciumdioxidpartikel isoliert werden.

EP 1 657 283 beschäftigt sich mit der Hydrophobierung von hydrophilen Kieselsäuren in flüssiger Phase und einem bestimmten Abtrennverfahren der flüssigen Phase. Das nach der Vermahlung erhaltene Pulver ist jedoch an einigen Stellen nicht mit dem Hydrophobierungsmittel belegt.

WO 2005/123578 offenbart mittels Hochdruckvermahlung hergestellte Dispersionen von hydrophilen Partikeln.

US 2006/171872 betrifft ein Verfahren zur Herstellung von hydrophoben Siliciumdoxidteilchen, bei dem hydrophile kolloidale Silica-Dispersion mit einem Silylamin-Behandlungsmittel zur Reaktion gebracht wird. Danach wird das Pulver vermahlen, so dass die Partikeln Stellen aufweisen, die nicht mit dem Hydrophobierungsmittel belegt sind.

In EP-B-1657283 wird ein recht aufwändiges Verfahren zur Herstellung oberflächenmodifizierter Siliciumdioxidpartikel offenbart, welches einen hydrophobierenden Behandlungsschritt, die Reaktion eines Disilazanes mit einem wässerigen Kieselsol, und einen nachfolgenden Phasentrennungsschritt, bei dem durch Zugabe eines Disilazanes oder Siloxanes bei erhöhter Temperatur eine Phasentrennung erzielt wird, umfasst.

Diese Verfahren weisen mehrere Nachteile auf.
- So sind die Oberflächenmodifizierungsmittel auf Silylamine beschränkt.
- Die Durchführung der Reaktion in einer wässerigen Phase führt dazu, dass bei hydrophoben Produkten der Grad der Hydrophobierung begrenzt ist.
- Die erreichbare Partikelgröße ist abhängig von der Partikelgröße der eingesetzten Siliciumdioxidpartikel. So führen stärker aggregierte Siliciumdioxidpartikel zu noch größeren oberflächenmodifizierten Siliciumdioxidpartikeln.
- Die nach der Abtrennung der flüssigen Phase erhaltenen oberflächenmodifizierten Siliciumdioxidpartikel sind als solche nicht redispergierbar, sondern müssen in einem Folgeschritt weiter zerkleinert werden.
- Die Zerkleinerung bewirkt, dass Teile der Oberfläche nicht oberflächenmodifiziert sind.

Die Aufgabe der vorliegenden Erfindung war es ein Verfahren bereitzustellen, bei dem diese Nachteile gemindert oder ganz vermieden werden können.

Gegenstand der Erfindung ist ein Verfahren zur Herstellung von oberflächenmodifizierten, Siliciumdioxidpartikeln mit einem mittleren Partikeldurchmesser von höchstens 100 nm umfassend die Schritte
a) Bereitstellen einer Vordispersion
b) Hochdruckvermahlung der Vordispersion unter Bildung einer Dispersion
c) Abtrennen der flüssigen Phase der Dispersion
   wobei die Vordispersion
   a1) oberflächenmodifizierte Siliciumdioxidpartikel, die
      - wenigstens teilweise aggregiert sind,
      - über Si-O-Si-Bindungen mit der oberflächenmodifizierenden Komponente verbunden sind und
      - auf ihrer Oberfläche noch reaktive Gruppen aufweisen,
   a2) eine oder mehrere siliciumorganische Verbindungen, die
      - wenigstens eine Silicium-Kohlenstoff-Bindung und
      - wenigstens eine funktionelle Gruppe aufweisen, die mit den reaktiven Gruppen unter Bildung einer kovalenten Si-O-Si-Bindung reagieren kann, und
   a3) ein oder mehrere Lösungsmittel enthält.

Bei den reaktiven Gruppen auf der Partikeloberfläche handelt es sich um solche, die bereits auf den eingesetzten Partikeln vorliegen und solchen, die während des Dispergiervorganges gebildet werden. Bei den reaktiven Gruppen handelt es sich überwiegend oder ausschließlich um OH-Gruppen. Die reaktiven Gruppen auf der Oberfläche der eingesetzten, oberflächenmodifizierten Siliciumdioxidpartikel können dabei vollständig oder nur teilweise mit den siliciumorganischen Verbindungen reagieren. Teilweise deshalb, weil beispielsweise einzelne reaktive Gruppen durch die Abschirmung der oberflächenmodifizierenden Verbindungen sterisch nicht zugänglich sind.

Bei dem erfindungsgemäßen Verfahren liegt wenigstens ein Teil der eingesetzten, oberflächenmodifizierten Siliciumdioxidpartikel in Form von Aggregaten vor. Unter teilweise ist zu verstehen, dass der Anteil aggregierter Partikel wenigstens 5 Gew.-%, bezogen auf die Summe der Aggregate und nicht aggregierten Partikel, gemäß der vorliegenden Erfindung sind dies Primärpartikel, beträgt. Bevorzugt werden jedoch Partikel eingesetzt, die weitestgehend aggregiert vorliegen, also zu mindestens 80 Gew.-%, in der Regel zu mindestens 90 Gew.-%, bezogen auf die Summe der Aggregate und nicht aggregierten Partikel. Die Anteile können beispielsweise durch Auszählung von TEM-Aufnahmen (TEM = Transmisions-Elektronen-Mikroskopie) ermittelt werden.

Unter Aggregaten sind fest, beispielsweise über Sinterhälse, verbundene Primärpartikel zu verstehen. Die Aggregate ihrerseits können sich zu Agglomeraten zusammenlagern, in denen die Aggregate nur lose miteinander verbunden sind. Agglomerate können bereits durch Einbringen von geringen Scherenergien wieder gespalten werden.

Der mittlere Partikeldurchmesser der in der Dispersion nach der Hochdruckvermahlung vorliegenden Partikel, umfassend Aggregate und Primärpartikel, beträgt höchstens 100 nm. Bevorzugt beträgt er 50 bis 100 nm, besonders bevorzugt 60 bis 90 nm.

Der mittlere Partikeldurchmesser der in der Vordispersion vorliegenden Teilchen ist größer als 100 nm. Der mittlere Partikeldurchmesser kann 200 nm bis mehrere Hundert Mikrometer betragen und umfasst sowohl Primärpartikel, Aggregate wie auch Agglomerate. Gewöhnlich beträgt der Partikeldurchmesser 10 bis 500 µm. Er kann zum Beispiel durch dynamische Lichtstreuung bestimmt werden. Die Vordispersion kann bei deutlich niedrigeren Scherraten hergestellt werden als die Dispersion. Beispielsweise können einfache Rührer, Dissolver oder Rotor-/Statormaschinen eingesetzt werden. Die Vordispersion dient hauptsächlich dem Zweck gegebenenfalls Agglomerate von oberflächenmodifizierten Siliciumdioxidpartikeln, die durch das Zusammenlagern von Aggregaten über kohäsive Kräfte entstehen können, aufzulösen.

Die in der Vordispersion vorliegenden oberflächenmodifizierten Siliciumdioxidpartikel können sowohl hydrophile wie hydrophobe Eigenschaften aufweisen.

Ein Maß für den Grad der Oberflächeneigenschaften, hydrophil bis hydrophob, stellt die Methanolbenetzbarkeit dar. Bei der Bestimmung der Methanolbenetzbarkeit werden in transparente Zentrifugenröhrchen jeweils 0,2 g (± 0,005 g) hydrophobe Siliciumdioxidpartikel eingewogen. Es werden zu jeder Einwaage 8,0 ml eines Methanol/Wasser Gemisches mit jeweils 10, 20, 30, 40, 50, 60, 70 und 80 Vol.-% Methanol zugegeben. Die verschlossenen Röhrchen werden 30 Sekunden geschüttelt und anschließend 5 Minuten bei 2500 min⁻¹ zentrifugiert. Die Sedimentvolumina werden abgelesen, in Prozent umgerechnet und graphisch gegen den Methanolgehalt (Vol.-%) aufgetragen. Der Wendepunkt der Kurve entspricht der Methanolbenetzbarkeit. Je höher die Methanolbenetzbarkeit desto größer ist die Hydrophobie der Siliciumdioxidpartikel. Die Methanolbenetzbarkeit der eingesetzten oberflächenmodifizierten Siliciumdioxidpartikel beträgt bevorzugt 20 bis 90, besonders bevorzugt 40 bis 80.

Bei dem erfindungsgemäßen Verfahren können prinzipiell alle oberflächenmodifizierten Siliciumdioxidpartikel eingesetzt werden, sofern sie wenigstens teilweise aggregiert sind, über Si-O-Si-Bindungen mit der oberflächenmodifizierenden Komponente verbunden sind und auf ihrer Oberfläche noch reaktive Gruppen aufweisen. Die BET-Oberfläche dieser Partikel liegt in der Regel bei 30 bis 400 m²/g, bevorzugt bei 80 bis 350 m²/g und besonders bevorzugt bei 150 bis 270 m²/g.

Insbesondere können oberflächenmodifizierte Siliciumdioxidpartikel eingesetzt werden, welche durch Oberflächenmodifizierung von pyrogenen, das heißt durch Flammenhydrolyse oder Flammenoxidation, erhaltenen Siliciumdioxidpartikeln erhalten wurden. Auch nachträglich strukturmodifizierte Typen können eingesetzt werden. Die Strukturmodifizierung der oberflächenmodifizierten Siliciumdioxidpartikel kann durch mechanische Einwirkung und einer eventuellen Nachvermahlung erfolgen. Die Strukturmodifizierung kann zum Beispiel mit einer Kugelmühle oder einer kontinuierlich arbeitenden Kugelmühle erfolgen. Die Nachvermahlung kann zum Beispiel mittels einer Luftstrahlmühle, Zahnscheibenmühle oder Stiftmühle erfolgen. Die Strukturmodifizierung ist auch in EP-A-808880 und DE-A-102006048509 beschrieben.

Als Mittel zur Herstellung der in der Vordispersion vorliegenden oberflächenmodifizierten Siliciumdioxidpartikel werden solche eingesetzt, die mindestens eine funktionelle Gruppe aufweisen, die eine Si-O-Si-Bindung mit den reaktiven Gruppen auf der Partikeloberfläche der zu modifizierenden Siliciumdioxidpartikel ausbilden können.

Neben der funktionellen Gruppe, die mit der Oberflächengruppe des Partikels eine chemische Bindung eingehen kann, weist das Modifizierungsmittel im allgemeinen einen Molekülrest auf, der nach Verknüpfung des Oberflächenmodifizierungsmittels dem Partikel mehr oder weniger starke hydrophobe oder hydrophile Eigenschaften verleihen kann.

Bevorzugt eingesetzte Oberflächenmodifizierungsmittel bei der Herstellung der eingesetzten oberflächenmodifizierten Siliciumdioxidpartikel sind Silane. Die Kohlenstoffketten dieser Verbindungen können durch O-, S-, oder NH-Gruppen unterbrochen sein. Es können ein oder mehrere Modifizierungsmittel verwendet werden. Die eingesetzten Silane weisen mindestens eine nicht hydrolysierbare Gruppe auf.

Bevorzugte Silane haben die allgemeine Formel RₓSiY₄₋ₓ (I) worin x den Wert 1, 2 oder 3 hat und die Reste R gleich oder verschieden sind und nicht hydrolysierbare Gruppen darstellen, die Reste Y gleich oder verschieden sind und hydrolysierbare Gruppen oder Hydroxygruppen bedeuten.

In der allgemeinen Formel (I) sind die hydrolysierbaren Gruppen Y, die gleich oder voneinander verschieden sein können, beispielsweise
- Wasserstoff,
- Halogen, beispielsweise F, Cl, Br oder I,
- Alkoxy, bevorzugt C₁-C₆-Alkoxy, wie Methoxy, Ethoxy, n-Propoxy, i-Propoxy und Butoxy,
- Aryloxy, bevorzugt C₆-C₁₀-Aryloxy, wie Phenoxy,
- Acyloxy, bevorzugt C₁-C₆-Acyloxy, wie Acetoxy oder Propionyloxy,
- Alkylcarbonyl, bevorzugt C₂-C₇-Alkylcarbonyl, wie Acetyl.

Bevorzugte hydrolysierbare Reste sind Halogen, Alkoxygruppen und Acyloxygruppen. Besonders bevorzugte hydrolysierbare Reste sind C₁-C₄-Alkoxygruppen, insbesondere Methoxy und Ethoxy.

Bei den nicht hydrolysierbaren Resten R, die gleich oder voneinander verschieden sein können, handelt es sich um Reste R mit oder ohne eine funktionelle Gruppe.

Der nicht hydrolysierbare Rest R ohne funktionelle Gruppe ist beispielsweise
- Alkyl, bevorzugt C₁-C₈-Alkyl, wie Methyl, Ethyl, n-Propyl, Isopropyl, n-Butyl, sek.-Butyl und tert.-Butyl, Pentyl, Hexyl, Octyl oder Cyclohexyl; substituiertes Alkyl.
- Alkenyl bevorzugt C₂-C₆-Alkenyl, wie Vinyl, 1-Propenyl, 2-Propenyl und Butenyl,
- Alkinyl, bevorzugt C₂-C₆-Alkinyl, wie Acetylenyl und Propargyl,
- Aryl, bevorzugt C₆-C₁₀-Aryl, wie Phenyl und Naphthyl, sowie entsprechende Alkaryle und Aralkyle wie Tolyl, Benzyl und Phenethyl.

Bevorzugte Oberflächenmodifizierungsmittel können insbesondere CH₃SiCl₃, CH₃Si(OC₂H₅)₃, CH₃Si(OCH₃)₃, C₂H₅SiCl₃, C₂H₅Si(OC₂H₅)₃, C₂H₅Si(OCH₃)₃, C₃H₇Si(OC₂H₅)₃, (C₂H₅O)₃SiC₃H₆Cl, (CH₃)₂SiCl₂, (CH₃)₂Si(OC₂H₅)₂, (CH₃)₂Si(OH)₂, C₆H₅Si(OCH₃)₃, C₆H(Si(OC₂H₅)₃, C₆H₅CH₂CH₂Si(OCH₃)₃, (C₆H₅)₂SiCl₂, (C₆H₅)₂Si(OC₂H₅)₂, (i-C₃H₇)₃SiOH, CH₂=CHSi(OOCCH₃)₃, CH₂=CHSiCl₃, CH₂=CH-Si(OC₂H₅)₃, CH₂=CHSi(OC₂H₅)₃, CH₂=CH-Si(OC₂H₄OCH₃)₃, CH₂=CH-CH₂-Si(OC₂H₅)₃, CH₂=CH-CH₂-Si(OC₂H₅)₃, CH₂=CH-CH₂-Si(OOCCH₃)₃, n-C₆H₁₃-CH₂-CH₂-Si(OC₂H₅)₃, und n-C₈H₁₇-CH₂-CH₂-Si(OC₂H₅)₃ sein.

Ein nicht hydrolysierbarer Rest R mit einer funktionellen Gruppe kann beispielsweise als funktionelle Gruppe eine Epoxid- (wie Glycidyl- oder Glycidyloxy-), Hydroxy-, Ether-, Amino-, Monoalkylamino-, Dialkylamino-, gegebenenfalls substituierte Anilino-, Amid-, Carboxy-, Acryl-, Acryloxy-, Methacryl-, Methacryloxy-, Mercapto-, Cyano-, Alkoxy-, Isocyanato-, Aldehyd-, Alkylcarbonyl-, Säureanhydrid- und Phosphorsäuregruppe umfassen.

Bevorzugte Beispiele für nicht hydrolysierbare Reste R mit funktionellen Gruppen sind ein
- Glycidyl- oder ein Glycidyloxy-(C₁-C₂₀)-alkylen-Rest, wie beta-Glycidyloxyethyl, gamma-Glycidyloxypropyl, delta-Glycidyloxybutyl, epsilon-Glycidyloxypentyl, omega-Glycidyloxyhexyl und 2-(3,4-Epoxycyclohexyl)ethyl,
- (Meth)acryloxy-(C₁-C₆)-alkylen-Rest, wie (Meth)acryloxymethyl, (Meth)acryloxyethyl, (Meth)acryloxypropyl oder (Meth)acryloxybutyl, und
- 3-Isocyanatopropylrest.

Konkret können als Oberflächenmodifizierungsmittel gamma-Glycidyloxypropyltrimethoxysilan, Glycidyloxypropyltriethoxysilan, 3-Isocyanatopropyltriethoxysilan, 3-Isocyanatopropyldimethylchlorsilan, Aminopropyltriethoxysilan, Aminopropyltrimethoxysilan, Aminomethyltriethoxysilan, Aminomethyltrimethoxysilan, Aminopropyltrichlorsilan, (N-Cyclohexylaminomethyl)triethoxysilan, 2-Aminoethyl-3-aminopropyltrimethoxysilan, N-(n-Butyl)-3-Aminopropyltrimethoxysilan, 2-Aminoethyl-3-aminopropylmethyldimethoxysilan, (3-Aminopropyl)diethoxymethylsilan, (3-Aminopropyl)ethyldiethoxysilan, (3-Methylaminopropyl)trimethoxysilan, (Aminoethylaminomethyl)phenethyltrimethoxysilan, (N,N-Diethyl-3-aminopropyl)trimethoxysilan, (N,N-Dimethylamino)dimethylchlorosilan, (N,N-Dimethylaminopropyl)trimethoxysilan, (N-Acetylglycyl)-3-aminopropyltrimethoxysilan, (N-Cyclohexylaminomethyl)methyldiethoxysilan, (N-Cyclohexylaminomethyl)triethoxysilan, (N-Phenylaminomethyl)methyldimethoxysilan, (N-Phenylaminomethyl)trimethoxysilan, 11-Aminoundecyltriethoxysilan, 3-(1,3-Dimethylbutyliden)aminopropyltriethoxysilan, 3-(1-Aminopropoxy)-3,3-dimethyl-1-propenyltrimethoxy silan, 3-(2,4-Dinitrophenylamino)propyltriethoxysilan, 3-(2-Aminoethylamino)propylmethyldimethoxysilan, 3-(2-Aminoethylamino)propyltrimethoxysilan, 3-(Cyclohexylamino)propyltrimethoxysilan, 3-(Aminophenoxy)propyltrimethoxysilan, 3-(N-Allylamino)propyltrimethoxysilan, 3-(N-Styrylmethyl-2-aminoethylamino)propyltrimethoxy silan, 3-(Phenylamino)propyltrimethoxysilan, 3-Aminopropyldiisopropylethoxysilan, 3-Aminopro-pyldimethylethoxysilan, 3-Aminopropylmethylbis (trimethylsiloxy)silan, 3-Aminopropylmethyldiethoxysilan, 3-Aminopropyltris(methoxyethoxyethoxy) silan, 3-Aminopropyltris(trimethylsiloxy)silan, 4-Aminobutyltriethoxysilan, Aminophenyltrimethoxysilan, Bis(2-hydroxyethyl)-3-aminopropyltriethoxysilan, Diethylaminomethyltriethoxysilan, N,N-Dimethylaminomethylethoxysilan, N-(2-Aminoethyl)-3-aminoisobutyldimethylmethoxysilan, N-(2-Aminoethyl)-3-aminopropylmethyldimethoxysilan, N-(2-Aminoethyl)-3-aminopropyltriethoxysilan, N-(2-Aminoethyl)-3-aminopropyltrimethoxysilan, N-(2-Aminomethyl)-11-aminoundecyltrimethoxysilan, N-(3-Acryloxy-2-hydroxypropyl)-3-aminopropyltriethoxy silan, N-(3-Methacryloxy-2-hydroxypropyl)-3-aminopropyl triethoxysilan, N-(6-Aminohexyl)aminopropyltrimethoxysilan, N-(Hydroxyethyl)-N-methylaminopropyltrimethoxysilan, N-3-[(Amino(polypropylenoxy)]aminopropyltrimethoxysilan, n-Butylaminopropyltrimethoxysilan, N-Cyclohexylaminopropyltrimethoxysilan, N-Ethylaminoisobutylmethyldiethoxysilan, N-Ethylaminoisobutyltrimethoxysilan, N-Methylaminopropylmethyldimethoxysilan, N-Methylaminopropyltrimethoxysilan, N-Phenylaminomethyltriethoxysilan, Phenylbis(dimethylamino)chlorosilan, tert.-Butylaminopropyltrimethoxysilan, Aminopropylsilanetriol, N-(2-Aminoethyl)-3-aminopropyl-silantriol, N-Cyclohexylaminomethyltriethoxysilan, N-Cyclohexylaminomethylmethyldiethoxysilan und N-Phenylaminomethyltrimethoxysilan, 3-(Meth)acryloxypropyltriethoxysilan und 3-(Meth)acryloxypropyltrimethoxysilan eingesetzt werden.

Weiterhin können die in der Vordispersion vorliegenden Siliciumdioxidpartikel auch durch Silylamine oberflächenmodifiziert werden. Unter Silylaminen sind Verbindungen zu verstehen, welche wenigstens eine Si-N-Bindung aufweisen und die mit den auf der Oberfläche der Siliciumdioxidpartikel vorliegenden Si-OH-Gruppen reagieren können. Beispiele hierfür sind Vinyldimethylsilylamin, Octyldimethylsilylamin, Phenyldimethylsilylamin, Bis(dimethylaminodimethylsilyl) ethan, Hexamethyldisilazan, (N,N-Dimethylamino)trimethylsilan und Bis(trifluoropropyl)tetramethyldisilazan. Weiterhin können cycliche Silazane eingesetzt werden.

Als Oberflächenmodifizierungsmittel eigen sich auch die cyclischen Polysiloxane D3, D4, D5 und ihre Homologen, wobei unter D3, D4 und D5 cyclische Polysiloxane mit 3, 4 oder 5 Einheiten des Typs -O-Si(CH₃)₂ verstanden wird, beispielsweise Octamethylcyclotetrasiloxan = D4. Auch Polysiloxane oder Siliconöle des Types Y-O-[(RR'SiO)ₘ-(^{R}''R'''SiO)ₙ]ᵤ-Y, mit m = 0,1,2,3,... ∞, bevorzugt 0,1,2,3,... 100000, n = 0,1,2,3,... ∞, bevorzugt 0,1,2,3,... 100000, u = 0,1,2,3,....∞, bevorzugt 0,1,2,3,... 100000, Y = CH₃, H, CₙH₂ₙ₊₁, n=2-20; Si(CH₃)₃, Si(CH₃)₂H, Si(CH₃)₂OH, Si(CH₃)₂(OCH₃), Si(CH₃)₂(CₙH₂ₙ₊₁), n=2-20 R, R', R'', R''', jeweils unabhängig voneinander Alkyl wie CₙH₂ₙ₊₁, n = 1 - 20; Aryl wie Phenylradikale und substitutierte Phenylradikale, (CH₂)ₙ-NH₂, H. Polysiloxane oder Siliconöle werden zur Oberflächenmodifizierung gewöhnlich thermisch aktiviert.

Geeignete in der Vordispersion einsetzbare, oberflächenmodifizierte Siliciumdioxidpartikel sind die kommerziell erhältlichen Materialien AEROSIL® R104, AEROSIL® R106, AEROSIL® R202, AEROSIL® R805, AEROSIL® R812, AEROSIL® R812 S, AEROSIL® R972, AEROSIL® R974, AEROSIL® R8200, AEROXIDE® LE-1 and AEROXIDE® LE-2, AEROSIL® R 9200, AEROSIL® R 8200 und AEROSIL® R 7200, alle Evonik Degussa.

Der Anteil der eingesetzten oberflächenmodifizierten Siliciumdioxidpartikeln, bezogen auf die Vordispersion, hängt unter anderem von der Art der Modifizierung der Partikel, des Lösungsmittels und der siliciumorganischen Verbindung ab. In der Regel wird der Anteil in einem Bereich von 1 bis 50 Gew.-% liegen. Bevorzugt ist ein Bereich von 10 bis 40 Gew.-%, besonders bevorzugt ein Bereich von 15 bis 30 Gew.-%.

Die Vordispersion umfasst weiterhin ein oder mehrere siliciumorganische Verbindungen, die wenigstens eine Silicium-Kohlenstoff-Bindung und wenigstens eine funktionelle Gruppe aufweisen, die mit den reaktiven Gruppen der Siliciumdioxidpartikel unter Bildung einer kovalenten Si-O-Si-Bindung reagieren kann.

Bei den siliciumorganischen Verbindungen handelt es sich um die gleichen Verbindungen, die auch als Oberflächenmodifizierungsmittel zur Herstellung, der bei dem erfindungsgemäßen Verfahren eingesetzten, oberflächenmodifizierten Siliciumdioxidpartikel genannt wurden.

Die besten Ergebnisse werden mit Silanen der allgemeinen Formel RₓSiY₄₋ₓ (I) erhalten, bei denen der nicht hydrolysierbare Rest keine funktionellen Gruppen trägt, wie zum Beispiel Trimethylchlorsilan und Trimethylethoxysilan. Auch Silylamine sind besonders geeignet. Hier sind insbesondere Hexamethyldisilazan und (N,N-Dimethylamino)trimethylsilan zu nennen.

Prinzipiell gilt, dass das Oberflächenmodifizierungsmittel, welches zur Herstellung der in der Vordispersion vorliegenden Siliciumdioxidpartikel eingesetzt wurde, und die siliciumorganische Verbindung gleich oder verschieden sein können. Beispielsweise kann die Vordispersion gemäß der vorliegenden Erfindung oberflächenmodifizierte Siliciumdioxidpartikel, welche aus der Reaktion von Siliciumdioxidpartikeln mit Hexamethyldisilazan erhalten wurden und als siliciumorganische Verbindung Hexamethyldisilazan enthalten. Ebenso ist es möglich, dass die Vordispersion gemäß der vorliegenden Erfindung oberflächenmodifizierte Siliciumdioxidpartikel, welche aus der Reaktion von Siliciumdioxidpartikeln mit Dimethyldichlorsilan erhalten wurden und als siliciumorganische Verbindung Hexamethyldisilazan enthalten.

Der Anteil an siliciumorganischer Verbindung, bezogen auf die eingesetzten, oberflächenmodifizierten Siliciumdioxidpartikel, beträgt bevorzugt 0,01 bis 10 Gew.-% und besonders bevorzugt 0,1 bis 3 Gew.-%. Wird Wert auf einen kompletten Umsatz der siliciumorganischen Verbindung gelegt, kann man den nötigen Anteil durch Vorversuche bestimmen, indem man zum Beispiel mittels einer Ultrazentrifuge feste und flüssige Phase trennt und die Konzentration der siliciumorganischen Verbindung in der Lösung bestimmt.

Weiterhin weist die beim erfindungsgemäßen Verfahren eingesetzte Vordispersion eine flüssige Phase auf, die ein oder mehrere Lösungsmittel und ein oder mehrere Siliciumverbindungen umfasst.

Die Lösungsmittel sind in der Regel organisch. Bevorzugt können Alkane, Aromaten, Alkohole, Monoalkylether von Polyolen, Ester, Ether und Ketone sein.

Geeignet Alkane und Aromaten können sein: Pentan, Hexan, Heptan, Octan, Isooctan, Petrolether, Benzol, Toluol, Xyxlol, Gemische von Aromaten.

Geeignete Alkohole können sein: Methanol, Ethanol, n-Propanol, i-Propanol, n-Butanol, i-Butanol, sec-Butanol, tert.-Butanol, n-Pentanol, i-Pentanol, 2-Methylbutanol, sec-Pentanol, tert.-Pentanol, 3-Methoxybutanol, n-Hexanol, 2-Methylpentanol, sec-Hexanol, 2-Ethylbutanol, sec-Heptanol, 3-Heptanol, n-Octanol, 2-Ethylhexanol, sec-Octanol, n-Nonylalkohol, 2,6-Dimethylheptanol-4, n-Decanol, sec-Undecylalkohol, Trimethylnonylalkohol, sec-Tetradecylalkohol, sec-Heptadecylalkohol, Phenol, Cyclohexanol, Methylcyclohexanol, 3,3,5-Trimethylcyclohexanol, Benzylalkohol, Diacetonalkohol, Ethylenglykol, 1,2-Propylenlycol, 1,3-Butylenglykol, 2,4-Pentandiol, 2-Methyl-2,4-Pentandiol, 2,5-Hexandiol, 2,4-Heptandiol, 2-Ethyl-1,3-Hexandiol, Diethylenglykol, Dipropylenglykol, Hexandiol, Octandiol, Triethylenglykol, Tripropylenglykol und Glycerin.

Geeignete Monoalkylether von Polyolen können sein: Ethylenglykolmonomethylether, Ethylenglykolmonoethylether, Ethylenglykolmonopropylether, Ethylenglykolmonobutylether, Ethylenglykolmonohexylether, Ethylenglykolmonophenylether, Ethylenglykolmono-2-Ethylbutylether, Diethylenglykolmonomethylether, Diethylenglykolmonoethylether, Diethylenglykolmonopropylether, Diethylenglykolmonobutylether, Diethylenglykolmonohexylether, Propylenglykolonomethylether, Propylenglykolmonoethylether, Propylenglykolmonopropylether, Propylenglykolmonobutylether, Dipropylenglykolmonomethylether, Dipropylenglykolmonoethylether und Dipropylenlycolmonopropylether.

Geeignete Ester können sein: Diethylcarbonat, Ethylencarbonat, Propylencarbonat, Methylacetat, Ethylacetat, gamma-Butyrolacton, gamma-Valerolacton, n-Propylacetat, iso-Propylacetat, n-Butylacetat, iso-Butylacetat, sec-Butylacetat, n-Pentylacetat, sec-Pentylacetat, 3-Methoxybutylacetat, Methylpentylacetat, 2-Ethylbutylacetat, 2-Ethylhexylacetat, Benzylacetat, Cyclohexylacetat, Methylcyclohexylacetat, n-Nonylacetat, Methylacetoacetat, Ethylacetoacetat, Ethylenglykolmonomethyletheracetat, Ethylenglykolmonoethyletheracetat, Diethylenglykolmonomethyletheracetat, Diethylenglykolmonoethyletheracetat, Diethylenglykolmono-n-Butyletheracetat, Propylenglykolmonomethyletheracetat, Propylenglykolmonoethyletheracetat, Propylenglykolmonopropyletheracetat, Propylenglykolmonobutyletheracetat, Dipropylenglykolmonomethyletheracetat, Dipropylenglykolmonoethyletheracetat, Glykoldiacetat, Methoxytriglykolacetat, Ethylpropionat, n-Butylpropionat, iso-Amylpropionat, Diethyloxalat, Di-n-Butyloxalat, Methyllactat, Ethyllactat, n-Butyllactat, n-Amyllactat, Diethylmalonat, Dimethylphthalat und Diethylphthalat.

Geeignete Ether können sein: Dipropylether, Diisopropylether, Dioxan, Tetrahydrofuran, Tetrahydropyran, Ethylenglykoldimethylether, Ethylenglykoldiethylether, Ethylenglykoldipropylether, Propylenglykoldimethylether, Propylenglykoldiethylether, Propylenglykoldipropylether, Diethylenglykoldimethylether, Diethylenglykoldiethylether und Diethylenglykoldipropylether.

Geeignete Ketone können sein: Aceton, Methylethylketon, Methyl-n-propylketon, Methyl-n-butylketon, Diethylketon, Methyl-iso-butylketon, Methyl-n-pentylketon, Ethyl-n-butylketon, Methyl-n-hexylketon, Di-1-butylketon, Trimethylnonanon, Cyclohexanon, 2-Hexanon, Methylcyclohexanon, 2,4-Pentandion, Acetonylaceton, Acetophenon, Acetylaceton, 2,4-Hexandion, 2,4-Heptandion, 3,5-Heptandion, 2,4-Octandion, 3,5-Octandion, 2,4-Nonandion, 3,5-Nonandion, 5-Methyl-2,4-hexandion und 2,2,6,6-Tetramethyl-3,5-heptandion.

Besonders bevorzugt sind Lösungsmittel ausgewählt aus der Gruppe bestehend aus Methanol, Ethanol, 1-Propanol, i-Propanol, n-Butanol, Hexan, Heptan, Octan, Isooctan, Petrolether.

Soll der spätere Verfahrenschritt der Abtrennung der flüssigen Phase der Dispersion mittels einer Sprühtrocknung erfolgen, wird zweckmäßigerweise ein leicht flüchtiges Lösungsmittel oder ein Gemisch von leicht flüchtigen Lösungsmitteln eingesetzt. Unter einem leicht flüchtigen Lösungsmittel soll eines mit einer Verdunstungszahl von 50 oder weniger, bevorzugt 5 bis 35, verstanden werden. Als Bezug dient Diethylether mit der Verdunstungszahl 1.

Der Anteil des Lösungsmittels in der Vordispersion kann 50 bis 98 Gew.-% betragen. Typischerweise liegt der Anteil bei 60 bis 95 Gew.-%.

Es ist bei der vorliegenden Erfindung wesentlich die Vordispersion einer Hochdruckvermahlung zuzuführen. Die Hochdruckvermahlung kann beispielsweise so ausgeführt werden, dass man die Vordispersion unter einen Druck von 50 bis 500 MPa setzt und über eine Düse, beispielsweise eine Loch- oder Spaltdüse, entspannt, wobei der Bohrungsdurchmesser bzw. die Spaltbreite der Düse 0,05 bis 1 mm, bevorzugt 0,1 bis 0,5 mm, beträgt und das Verhältnis Länge/Durchmesser der Bohrung bzw. das Verhältnis Tiefe/Spaltbreite des Schlitzspaltes der Düse 1 bis 10 beträgt. Gegebenenfalls kann nach dieser Art der Dispergierung eine Abtrennung grober Partikel, beispielsweise durch Filtration oder Sedimentation, nötig sein.

Bevorzugt ist eine Ausführungsform des erfindungsgemäßen Verfahrens, bei dem man die Vordispersion in wenigstens zwei Teilströme aufteilt, diese unter Druck setzt und über jeweils eine Düse auf einen gemeinsamen Kollisionspunkt hin entspannt.

Die Strahlen der Teilströme weisen dabei bevorzugt eine Geschwindigkeit von mindestens 300 m·s⁻¹, besonders bevorzugt ein von 400 bis 1000 m·s⁻¹ und ganz besonders bevorzugt eine von 600 bis 900 m·s⁻¹ auf. Unter Geschwindigkeit ist dabei die Geschwindigkeit der Teilströme im Düsenkanal zu verstehen. Diese ist definiert als Quotient aus Volumenstrom pro Düse in m³·s⁻¹ und Fläche der Bohrung einer Düse in m² definiert. Der Durchmesser der Bohrung beträgt in der Regel 0,1 bis 1 mm, bevorzugt 0,2 bis 0,4 mm.

Das erfinduungsgemäße Verfahren sieht weiterhin die Abtrennung der flüssigen Phase der Dispersion vor. Dies kann beispielsweise durch Destillieren, Filtrieren oder Zentrifugieren erfolgen. Die Abtrennung der flüssigen Phase muß dabei nicht vollständig sein. So können die nach dem erfindungsgemäßen Verfahren erhaltenen oberflächenmodifizierten Siliciumdioxidpartikel noch Anhaftungen von Lösungsmittel aufweisen. Falls gewünscht kann auch ein Trocknungsschritt nachgeschaltet werden. Ebenso können die nach der Abtrennung der flüssigen Phase erhaltenen Partikel mit geeigneten Lösungsmitteln gewaschen und nachfolgend besipielsweise durch Filtrieren oder Zentrifugieren abgetrennt werden.

Als geeignete Verfahren zur Abtrennung der flüssigen Phase haben sich die Sprühtrocknung und die Gefriertrocknung erwiesen. Insbesondere bei der Sprühtrocknung werden gute Ergebnisse erzielt. Dabei wird die Dispersion mittels eines Inertgases über eine Düse in eine geheizte Trockenkammer versprüht und flüchtige Bestandteile entfernt. Bei dieser Ausführungsform soll die eingesetzte Dispersion keine schwerflüchtigen Bestandteile enthalten. Wie bereits vorne ausgeführt besteht die flüssige Phase der Dispersion aus leicht flüchtigen Lösungsmitteln mit einer Verdunstungszahl von 50 oder weniger, bevorzugt 5 bis 35. Bevorzugt können dies Hexan, Heptan, Octan, Isooctan, Petrolethergemische, Benzol, Toluol, Xylol, Aromatengemische, Methanol, Ethanol, 1-Propanol, i-Propanol, 1-Butanol und Gemische hiervon sein.

Die nach der Abtrennung der flüssigen Phase erhaltenen Partikel weisen eine niedrige Stampfdichte auf, welche in der Regel nicht mehr als 50% über der der eingesetzten Siliciumdioxidpartikel liegt. So liegt beispielsweise die Stampfdichte der nach Sprühtrocknung einer nach Hochdruckvermahlung erhaltenen Dispersion, welche mit Hexamethyldisilazan oberflächenmodifiziertes, pyrogen hergestelltes Siliciumdioxid mit einer BET-Oberfläche von 200 bis 240 m²/g, Hexamethyldisilazan und Ethanol enthält bei lediglich 55 g/l.

Ein weiterer Gegenstand der Erfindung sind oberflächenmodifizierte Siliciumdioxidpartikel in Form von Aggregaten und/oder isolierten Einzelpartikeln mit jeweils einem mittleren Partikeldurchmesser von höchstens 100 nm, einer Stampfdichte, die nicht mehr als 50% über der der eingesetzten Siliciumdioxidpartikel liegt, die nach dem erfindungsgemäßen Verfahren erhältlich sind, wobei die eingesetzten oberflächenmodifizierten Siliciumdioxidpartikel pyrogener Herkunft sind. Dabei ist unter redispergierbar zu verstehen, dass die oberflächenmodifizierten Siliciumdioxidpartikel bereits bei geringen Scherraten, etwa durch Rühren (Zahnscheibe), in Dispersionen einarbeitbar sind.

Ein weiterer Gegenstand der Erfindung ist die Verwendung der erfindungsgemäßen oberflächenmodifizierten Siliciumdioxidpartikel in Tonerpulvern, Silikonkautschuk, Adhäsiven und kratzfesten Oberflächenbeschichtungen.

### Beispiele:

Es wird eine Vordispersion, welche 15 Gew.-%, bezogen auf die Vordispersion, AEROSIL® R812 S, Evonik Degussa, und 1 Gew.-% Hexamethyldisilazan, bezogen auf AEROSIL® R812 S, in Ethanol enthält, mittels eines Dissolvers hergestellt. Diese Vordispersion wird anschließend in drei Teilströme geteilt, unter Druck gesetzt und die Teilströme über eine Diamantdüse auf einen gemeinsamen Kollisionspunkt hin entspannt, wobei die Teilströme jeweils einen Winkel von 120° und eine Geschwindigkeit von 700 m·s⁻¹ aufweisen.

Die erhaltene Dispersion weist einen mittleren Partikeldurchmesser (Medianwert) von 86 nm auf.

Die Viskosität beträgt im Scherbereich von 0,1 bis 1000s⁻¹:

| Scherrate | Viskosität 23(°C) |
|---|---|
| s⁻¹ | mPa·s |
| 0,1 | 147,6 |
| 0,1374 | 68,13 |
| 0,1887 | 42,24 |
| 0,2593 | 27,73 |
| 0,3562 | 22,4 |
| 0,6723 | 19,25 |
| 0,9237 | 15,36 |
| 1,269 | 15,59 |
| 11,72 | 13,45 |
| 108,3 | 11,37 |
| 1000 | 9,052 |

Die Dispersion wird anschließend sprühgetrocknet. Die Stampfdichte der erhaltenen Partikel beträgt 55 g/l.

Die Partikel werden mittels eines Dissolvers in Ethanol eingearbeitet. Die mittlere Partikeldurchmesser ist mit 88 nm praktisch identisch mit dem aus der Dispersion erhaltenen Wert. Es handelt sich demnach um ein im nanoskaligen Maßstab redispergierbares Pulver.

## Patentansprüche

1. Verfahren zur Herstellung von oberflächenmodifizierten Siliciumdioxidpartikeln mit einem mittleren Partikeldurchmesser von höchstens 100 nm umfassend die Schritte
a) Bereitstellen einer Vordispersion
b) Hochdruckvermahlung der Vordispersion unter Bildung einer Dispersion
c) Abtrennen der flüssigen Phase der Dispersion
wobei die Vordispersion
a1) oberflächenmodifizierte Siliciumdioxidpartikel, die
- wenigstens teilweise aggregiert sind,
- über Si-O-Si-Bindungen mit der oberflächenmodifizierenden Komponente verbunden sind und
- auf ihrer Oberfläche noch reaktive Gruppen aufweisen,
a2) eine oder mehrere siliciumorganische Verbindungen, die
- wenigstens eine Silicium-Kohlenstoff-Bindung und
- wenigstens eine funktionelle Gruppe aufweisen, die mit den reaktiven Gruppen unter Bildung einer kovalenten Si-O-Si-Bindung reagieren kann, und
a3) ein oder mehrere Lösungsmittel enthält.

2. Verfahren nach Anspruch 1, **dadurch gekennzeichnet, dass**
die eingesetzten oberflächenmodifizierten Siliciumdioxidpartikel pyrogener Herkunft sind.

3. Verfahren nach den Ansprüchen 1 oder 2, **dadurch gekennzeichnet, dass**
der Anteil an eingesetzten obeflächenmodifizierten Siliciumdioxidpartikeln, bezogen auf die Vordispersion, 1 bis 50 Gew.-% ist.

4. Verfahren nach den Ansprüchen 1 bis 3, **dadurch gekennzeichnet, dass**
man als siliciumorganische Verbindung ein Silylamin einsetzt.

5. Verfahren nach den Ansprüchen 1 bis 4, **dadurch gekennzeichnet, dass**
der Anteil an siliciumorganischer Verbindung, bezogen auf die eingesetzten oberflächenmodifizierten Siliciumdioxidpartikel, 0,01 bis 10 Gew.-% ist.

6. Verfahren nach den Ansprüchen 1 bis 5, **dadurch gekennzeichnet, dass**
man als Lösungsmittel ein oder mehrere organische, leicht flüchtige Lösungsmittel einsetzt.

7. Verfahren nach den Ansprüchen 1 bis 6, **dadurch gekennzeichnet, dass** man die Hochdruckvermahlung so durchführt, dass man die Vordispersion in wenigstens zwei Teilströme aufteilt diese unter Druck setzt und über jeweils eine Düse auf einen gemeinsamen Kollisionspunkt hin entspannt.

8. Verfahren nach Anspruch 7, **dadurch gekennzeichnet, dass**
die Strahlen der Teilströme eine Geschwindigkeit von mindestens 300 m·s⁻¹ aufweisen.

9. Verfahren nach den Ansprüchen 1 bis 8, **dadurch gekennzeichnet, dass**
die Abtrennung der flüssigen Phase durch Sprühtrocknung erfolgt.

10. Oberflächenmodifizierte Silciumdioxidpartikel
a) mit einem mittleren Partikeldurchmesser von höchstens 100 nm und
b) einer Stampfdichte, die nicht mehr als 50% über der der eingesetzten Siliciumdioxidpartikel liegt, erhältlich gemäß des Verfahrens nach den Ansprüchen 1 bis 9, wobei die eingesetzten oberflächenmodifizierten Siliciumdioxidpartikel pyrogener Herkunft sind.

11. Verwendung der oberflächenmodifizierten Siliciumdioxidpartikel gemäß Anspruch 10 in Tonerpulvern, Silikonkautschuk, Adhäsiven und kratzfesten Oberflächenbeschichtungen.

## Claims

1. Process for preparing surface-modified silicon dioxide particles with a mean particle diameter of at most 100 nm, comprising the steps of
a) providing a predispersion
b) high-pressure grinding of the predispersion to form a dispersion
c) removing the liquid phase of the dispersion,
the predispersion comprising
a1) surface-modified silicon dioxide particles which
- are at least partly aggregated,
- are bonded to the surface-modifying component via Si-O-Si bonds and
- still have reactive groups on their surface,
a2) one or more organosilicon compounds which
- have at least one silicon-carbon bond and
- at least one functional group which can react with the reactive groups to form a covalent Si-O-Si bond, and
a3) one or more solvents.

2. Process according to Claim 1, **characterized in that** the surface-modified silicon dioxide particles used are of pyrogenic origin.

3. Process according to Claim 1 or 2, **characterized in that** the proportion of surface-modified silicon dioxide particles used, based on the predispersion, is 1 to 50% by weight.

4. Process according to Claims 1 to 3, **characterized in that** the organosilicon compound used is a silylamine.

5. Process according to Claims 1 to 4, **characterized in that** the proportion of organosilicon compound, based on the surface-modified silicon dioxide particles used, is from 0.01 to 10% by weight.

6. Process according to Claims 1 to 5, **characterized in that** the solvents used are one or more organic, volatile solvents.

7. Process according to Claims 1 to 6, **characterized in that** the high-pressure grinding is carried out in such a way that the predispersion is divided into at least two substreams, and the latter are placed under pressure and decompressed through one nozzle each to a common point of collision.

8. Process according to Claim 7, **characterized in that** the jets of the substreams have a speed of at least 300 m·s⁻¹.

9. Process according to Claims 1 to 8, **characterized in that** the liquid phase is removed by spray-drying.

10. Surface-modified silicon dioxide particles
a) with a mean particle diameter of at most 100 nm and
b) a tamped density which is not more than 50% greater than that of the silicon dioxide particles used obtainable by the process according to Claims 1 to 9, wherein the surface-modified silicon dioxide particles used are of pyrogenic origin.

11. Use of the surface-modified silicon dioxide particles according to Claim 10 in toner powders, silicone rubber, adhesives and scratch-resistant surface coatings.

## Revendications

1. Procédé de fabrication de particules de dioxyde de silicium modifiées en surface ayant un diamètre de particule moyen d'au plus 100 nm, comprenant les étapes suivantes :
a) la préparation d'une pré-dispersion,
b) le broyage à pression élevée de la pré-dispersion avec formation d'une dispersion,
c) la séparation de la phase liquide de la dispersion,
la pré-dispersion contenant :
a1) des particules de dioxyde de silicium modifiées en surface, qui
- sont au moins partiellement agrégées,
- sont reliées par des liaisons Si-O-Si avec le composant modifiant la surface, et
- comprennent encore des groupes réactifs sur leur surface,
a2) un ou plusieurs composés organiques de silicium, qui
- comprennent au moins une liaison silicium-carbone, et
- au moins un groupe fonctionnel, qui peut réagir avec les groupes réactifs avec formation d'une liaison Si-O-Si covalente, et
a3) un ou plusieurs solvants.

2. Procédé selon la revendication 1, **caractérisé en ce que** les particules de dioxyde de silicium modifiées en surface utilisées sont d'origine pyrogène.

3. Procédé selon la revendication 1 ou 2, **caractérisée en ce que** la proportion de particules de dioxyde de silicium modifiées en surface utilisées, par rapport à la pré-dispersion, est de 1 à 50 % en poids.

4. Procédé selon les revendications 1 à 3, **caractérisé en ce qu'**une silylamine est utilisée en tant que composé organique de silicium.

5. Procédé selon les revendications 1 à 4, **caractérisé en ce que** la proportion de composé organique de silicium, par rapport aux particules de dioxyde de silicium modifiées en surface utilisées, est de 0,01 à 10 % en poids.

6. Procédé selon les revendications 1 à 5, **caractérisé en ce qu'**un ou plusieurs solvants organiques facilement volatils sont utilisés en tant que solvants.

7. Procédé selon les revendications 1 à 6, **caractérisé en ce que** le broyage à pression élevée est réalisé de telle sorte que la pré-dispersion est divisée en au moins deux courants partiels, ceux-ci sont mis sous pression et détendus chacun par une buse jusqu'à un point de collision commun.

8. Procédé selon la revendication 7, **caractérisé en ce que** les jets des courants partiels présentent une vitesse d'au moins 300 m·s⁻¹.

9. Procédé selon les revendications 1 à 8, **caractérisé en ce que** la séparation de la phase liquide a lieu par séchage par pulvérisation.

10. Particules de dioxyde de silicium modifiées en surface
a) ayant un diamètre de particule moyen d'au plus 100 nm et
b) une densité tassée, qui ne se situe pas plus de 50 % au-dessus de celle des particules de dioxyde de silicium utilisées, pouvant être obtenues par le procédé selon les revendications 1 à 9, les particules de dioxyde de silicium modifiées en surface utilisées étant d'origine pyrogène.

11. Utilisation des particules de dioxyde de silicium modifiées en surface selon la revendication 10 dans des poudres de toner, du caoutchouc de silicone, des adhésifs et des revêtements de surfaces résistants aux éraflures.
